# EUROPÄISCHE PATENTSCHRIFT

(11) **EP 2 851 194 B1**
(45) Veröffentlichungstag und Bekanntmachung des Hinweises auf die Patenterteilung: **16.12.2015**
(21) Anmeldenummer: 13004600.6
(22) Anmeldetag: 20.09.2013
(51) Int. Cl.: B32B 15/08, B32B 15/12, B32B 3/02, B32B 3/30, G09F 3/02

(54) **Sicherheitselement, insbesondere Sicherheitsetikett**
Safety element, in particular safety label
Elément de sécurité, notamment étiquette de sécurité

(43) Veröffentlichungstag der Anmeldung: 25.03.2015
(73) Patentinhaber: Hueck Folien Ges.m.b.H, 4342 Baumgartenberg (AT)
(72) Erfinder: Aigner, Georg, 4363 Pabneukirchen (AT); Mayrhofer, Marco, 4522 Sierning (AT)
(74) Vertreter: Landgraf, Elvira

(56) Entgegenhaltungen:
- EP-A1- 0 657 859
- WO-A1-91/19649
- WO-A1-2005/077668
- WO-A2-91/18377
- US-A- 5 582 434

## Beschreibung

Die Erfindung betrifft ein Sicherheitselement, insbesondere als Sicherheitsetikett, das mindestens einen Farbkippeffekt aufweist, der nach einem Manipulationsversuch irreversibel verändert oder zerstört wird.

Aus EP 1 716 007 B1 ist ein fälschungssicheres Sicherheitselement bekannt, das aus jeweils mindestens einer elektromagnetische Wellen reflektierenden Schicht, einer polymeren Abstandsschicht und einer Schicht gebildet von metallischen Clustern besteht, wobei eine oder mehrere der Schichten zusätzlich zu ihrer Funktion im Farbkippeffekt-Setup weitere Sicherheitsfunktionen erfüllen.
Diese Sicherheitselemente werden entweder auf ein Trägersubstrat appliziert oder beispielsweise bei der Papierherstellung für Sicherheitspapiere zumindest teilweise in das Papier eingebettet.

Aus EP 1 972 674 A ist ein Sicherheitsetikett oder ein Sicherheitsklebeband mit Manipulationsnachweis bekannt, das ein flexibles Trägersubstrat auf Basis einer flexiblen Kunststofffolie aufweist, wobei auf das Trägersubstrat partiell ein Trennlack in Form von Buchstaben, Zeichen, Symbolen, Linien, Guillochen, Zahlen oder Schriftzügen, anschließend eine vollflächige färbige oder transparente Beschichtung oder Metallisierung und auf diese vollflächige Schicht eine vollflächige transparente oder färbige Trennschicht und auf dieser Trennschicht eine Selbstklebebeschichtung aufgebracht ist.

Aufgabe der vorliegenden Erfindung war es ein Sicherheitselement, insbesondere ein Sicherheitsetikett bereitzustellen, das in intaktem Zustand mindestens einen Farbkippeffekt aufweist, der bei einem Manipulationsversuch jedoch irreversibel verändert oder zerstört wird.

Gegenstand der Erfindung ist daher ein Sicherheitselement insbesondere für Sicherheitsetiketten, aufweisend ein Trägersubstrat (1), das auf einer Oberfläche einen Farbkippeffektaufbau bestehend aus einer Schicht aus metallischen Clustern (2), einer Abstandsschicht (3) und einer elektromagnetische Wellen reflektierenden Schicht (6) aufweist, dadurch gekennzeichnet, dass die Abstandsschicht (3) aus zwei aufeinander situierten Teilschichten (4, 5) gleicher oder unterschiedlicher Zusammensetzung besteht, wobei die erste, der Clusterschicht (2) zugewandte Teilschicht (4) eine größere Haftung zur Clusterschicht als zur zweiten Teilschicht (5) aufweist und die zweite, der elektromagnetische Wellen reflektierenden Schicht (6) zugewandte Teilschicht (5) eine größere Haftung zur elektromagnetische Wellen reflektierenden Schicht (6) als zur ersten Teilschicht (4) aufweist.

Als Trägersubstrat kommen beispielsweise Trägerfolien vorzugsweise flexible Kunststofffolien, beispielsweise aus PI, PP, MOPP, PE, PPS, PEEK, PEK, PEI, PSU, PAEK, LCP, PEN, PBT, PET, PA, PC, COC, POM, ABS, PVC, Fluorpolymere, wie Teflon und dergleichen in Frage. Die Trägerfolien weisen vorzugsweise eine Dicke von 5 - 700 µm, bevorzugt 5 - 200 µm, besonders bevorzugt 12 - 100 µm auf.

Auf einer Oberfläche des Trägersubstrats ist eine Schichtfolge, die einen Farbkippeffekt erzeugt, aufgebracht. Dabei ändert sich in Abhängigkeit vom Betrachtungswinkel der Farbeindruck, beispielsweise von Magenta zu Grün oder von Grün zu Blau.

Dabei kann vorerst ggf. auf das Trägersubstrat eine partielle Trennlackbeschichtung aufgebracht sein. Als Trennlackbeschichtung können insbesondere bekannte schlecht haftende Lackzusammensetzungen, beispielsweise auf Basis von Cylcloolefincopolymeren, Nitrocellulose, Acrylaten, Polyvinylchlorid, Ethylenacrylatcopolymeren oder Styrolacrylaten in einem geeigneten Lösungsmittel in Frage. Zur Einstellung der Haftung werden dabei vorzugsweise chlorierte Polyolefine zugesetzt. Der Anteil der chlorierten Polyolefine in der Zusammensetzung kann 20 bis 130 Gew% im Verhältnis zum Basispolymer betragen. Ferner können auch sehr dünn in einer Dicke von etwa 20 - 300 nm aufgetragene Polyamid-, Polyethylen-, Fluorpolymerwachsschichten oder Silikonbeschichtungen zur Anwendung kommen.

Auf dieser ersten Oberfläche des Trägersubstrats oder auf der partiellen Trennlackbeschichtung ist eine Schicht aus metallischen Clustern aufgebracht. Diese Schicht aus metallischen Clustern kann vollflächig oder partiell aufgebracht sein. Die metallischen Cluster können beispielsweise aus Aluminium, Gold, Palladium, Platin, Chrom, Silber, Kupfer, Nickel, Tantal, Titan, Zinn, Zink, Molybdän und dergleichen oder deren Legierungen, wie beispielsweise Au/Pd, Cu/Ni oder Cr/Ni bestehen. Vorzugsweise können auch Clustermaterialien aufgebracht werden, beispielsweise halbleitende Elemente der III. bis VI. Haupt- bzw. der II. Nebengruppe, deren Plasmonenanregung extern (z.B. über Röntgen- oder Ionenstrahlung oder elektromagnetische Wechselwirkungen) triggerbar ist. Dadurch wird bei Betrachtung mit einem geeigneten Lesegerät eine Änderung im Farbspektrum (z.B. Intensitätsänderung) bzw. ein Blinken des Farbkippeffekts sichtbar.
Die Clusterschicht kann auch zusätzliche Eigenschaften, beispielsweise elektrisch leitfähige, magnetische oder fluoreszierende Eigenschaften aufweisen. So weist beispielsweise eine Clusterschicht aus Ni, Cr/Ni, Fe bzw. Core-Shell-Strukturen mit diesen Materialien bzw. Mischungen dieser Materialien mit den oben erwähnten Clustermaterialien derartige zusätzliche Merkmale auf. Unter anderem durch Core-Shell-Strukturen lassen sich auch fluoreszierende Cluster herstellen, z.B. unter Verwendung von Quantum Dots^{®} der Firma Quantum Dot Corp.
Bei der Herstellung der Clusterschicht in Vakuumprozessen kann vorteilhafterweise das Wachstum der Cluster und damit deren Form sowie die optischen Eigenschaften durch Einstellung der Oberflächenenergie oder der Rauhigkeit der darunter liegenden Schicht beeinflusst werden. Dies verändert in charakteristischer Weise die Spektren. Dies kann beispielsweise durch thermische Behandlung im Beschichtungsprozess oder durch Vorheizen des Substrats erfolgen.

Ferner können diese Parameter beispielsweise durch Behandlung der Oberfläche mit oxidierenden Flüssigkeiten, beispielsweise mit Na-Hypochlorit oder in einem PVD oder CVD-Prozess gezielt verändert werden.
Die Clusterschicht kann vorzugsweise mittels Sputtern aufgebracht werden.
Dabei werden die Eigenschaften der Schicht, insbesondere die Dichte und die Struktur, vor allem durch die Leistungsdichte, die verwendete Gasmenge und deren Zusammensetzung, die Temperatur des Substrats und die Bahngeschwindigkeit eingestellt.
Zur Aufbringung mittels drucktechnischer Verfahren werden, nach einem gegebenenfalls nötigen, Aufkonzentrieren der Cluster geringe Mengen eines inerten Polymers, beispielsweise PVA, Polymethylmethacrylat, Nitrocellulose-, Polyester- oder Urethansysteme der Lösung zugemischt. Die Mischung kann dann anschließend mittels eines Druckverfahrens, beispielsweise Sieb-, Flexo- oder vorzugsweise Tiefdruckverfahren, mittels eines Beschichtungsverfahrens, beispielsweise Lackieren, Aufsprühen, Walzenauftragstechniken und dergleichen aufgebracht werden. Solche Metallcluster nennt man kolloidale Metallcluster, da sie vor der Aufbringung in einer kolloidalen Lösung in dem Lacksystem bzw. in Lösemittel vorliegen.
Die Dicke der Clusterschicht beträgt vorzugsweise 2 - 20 nm, besonders bevorzugt 3 - 10 nm.

Anschließend ist auf der Clusterschicht eine im Wesentlichen transparente Abstandsschicht aufgebracht.
Diese Abstandsschicht besteht erfindungsgemäß aus zwei Teilschichten, die aufeinander angeordnet sind. Die Teilschichten können aus anorganischen Materialien wie Metalloxiden, -sulfiden, -fluoriden oder -nitriden, beispielsweise Siliziumoxid, Zinksulfid, Kupferoxid, Titanoxid, Zirkonoxid, Magnesiumfluorid und dergleichen oder aus organischen Polymeren, wie Cycloolefincopolymeren, beispielsweise Topas^{®} 6013, Topas^{®} 6015, Topas^{®} 6017, Topas^{®} 5013 der Fa. Ticona, Nitrocellulose, beispielsweise E400 der Fa. Wolff Walsrode, Acrylaten, Methacrylaten, Polyvinylchloridpolymeren, beispielsweise Vinnol E15/45M, H 30/48M, oder E 22/48A der Fa. Wacker Chemie AG, Ethylenacrylatcopolymeren oder Styrolacrylaten, beispielsweise aus der Acronalserie der BASF AG, Acronal^{®} 280D, 12DE, 1051, 7104, aus Epoxiden oder Polyurethanen bestehen.

Die anorganischen Teilschichten werden vorzugsweise in einem bekannten PVD- oder CVD Verfahren aufgebracht.
Die polymeren Teilschichten werden üblicherweise mittels Druck-, Walzen-, Düsen-, Sprüh-, Tauch- oder Lackierverfahren oder einer Kombination aus diesen Verfahren aufgebracht.

Die erste, der Clusterschicht zugewandte Teilschicht der Abstandsschicht ist dabei als auf der Clusterschicht gut haftende Schicht ausgeführt. Die Haftung der ersten Teilschicht der Abstandsschicht zur Clusterschicht kann dabei durch Corona-, Flamm- oder Plasmabehandlung ggf. verbessert werden.

Diese erste Teilschicht kann vollflächig oder partiell, beispielsweise in Form von positiven oder negativen Buchstaben, Zahlen, Symbolen, Zeichen, Linien, Guillochen oder dergleichen ausgeführt sein.

Auf dieser ersten Teilschicht der Abstandsschicht ist die zweite Teilschicht der Abstandsschicht aufgebracht.
Die zweite Teilschicht weist zur darauffolgenden, elektromagnetische Wellen reflektierenden Schicht eine bessere Haftung auf als zur ersten Teilschicht.
Die zweite Teilschicht kann vollflächig oder partiell, beispielsweise in Form von positiven oder negativen Buchstaben, Zahlen, Symbolen, Zeichen, Linien, Guillochen oder dergleichen ausgeführt sein.

Besitzen die beiden Teilschichten gleiche oder ähnliche Zusammensetzung, kann durch geeignete Oberflächenfunktionalisierung der der zweiten Teilschicht zugewandten Oberfläche der ersten Teilschicht die Haftung zwischen den beiden Teilschichten beeinflusst werden. Geeignete Maßnahmen zur Oberflächenfunktionalisierung sind beispielsweise Corona- Flamm-, Plasmabehandlung, Druckvorbehandlung, chemische Vorbehandlung, Säurebehandlung, UV-Belichtung, Ozonisierung, und dergleichen. Ferner können zur Einstellung der Haftung einer polymeren zweiten Teilschicht chlorierte Polyolefine zugesetzt werden. Der Anteil der chlorierten Polyolefine in der Zusammensetzung kann 20 bis 130 Gew% im Verhältnis zum Basispolymer betragen.

Je nach Zusammensetzung können die beiden Teilschichten gleichen oder unterschiedlichen Brechungsindex aufweisen.

Die Dicke der aus zwei Teilschichten bestehenden Abstandsschicht kann dabei in einem weiten Bereich gezielt variiert werden, beispielsweise in einem Bereich von etwa 10 nm bis 4 µm. Dabei können die beiden Teilschichten der Abstandsschicht gleiche oder unterschiedliche Dicke aufweisen und eine Dicke von jeweils etwa 10 nm bis 2 µm aufweisen.

Die beiden Teilschichten können farblos transparent sein. Mindestens eine der Teilschichten kann auch eine Färbung aufweisen, wobei der Farbton der beiden Teilschichten dann vorzugsweise unterschiedlich ist.
Zur Erzeugung eines Farbtons einer organischen Schicht werden dem entsprechenden Polymer Farbstoffe oder Pigmente zugegeben, wobei alle handelsüblichen Farbstoffe oder Pigmente geeignet, beispielsweise Pigmente auf anorganischer Basis wie Titandioxid, Zinksulfid, Kaolin, ATO, FTO, Aluminium, Chrom- und Siliciumoxide oder Pigmente auf organischer Basis, wie Phthalocyaninblau, i-Indolidingelb, Dioxazinviolett und dergleichen als auch farbige und/oder verkapselte Pigmente verwendet werden. Als Farbstoffe kommen beispielsweise 1,1- oder 1,2- Chrom-Cobalt-Komplexe in Frage. Dabei darf durch die verwendeten Pigmente oder Farbstoffe die Transparenz der Schichten nicht wesentlich beeinflusst werden, um den Interferenzeffekt in der Abstandsschicht nicht zu unterdrücken. Die Färbung der Abstandsschicht überlagert sich mit dem Farbkippeffekt und führt so zu veränderten Farbeindrücken bei unterschiedlichen Betrachtungswinkeln.
Teilschichten aus anorganischen Materialen sind entweder farblos transparent oder weisen eine Eigenfarbe auf.

Auf der zweiten Teilschicht ist anschließend eine elektromagnetische Wellen reflektierende Schicht, die Spiegelschicht oder Reflexionsschicht aufgebracht. Diese Schicht kann vorzugsweise aus Metallen, wie beispielsweise Aluminium, Gold, Chrom, Silber, Kupfer, Titan, Zinn, Platin, Nickel, Molybdän oder Tantal, aus Halbleitern, wie beispielsweise Silizium, und deren Legierungen, beispielsweise Nickel/Chrom, Kupfer/Aluminium und dergleichen oder einer Druckfarbe mit Metallpigmenten sowie aus Metalloxiden, -sulfiden, -nitriden oder-fluoriden bestehen.
Die elektromagnetische Wellen reflektierende Schicht wird vollflächig oder partiell durch bekannte Verfahren, wie Sprühen, Bedampfen, Sputtern, PVD- oder CVD-Verfahren oder beispielsweise als Druckfarbe durch bekannte Druckverfahren (Tief-, Flexo-, Sieb-, Digitaldruck), durch Lackieren, Walzenauftragsverfahren, Schlitzdüsen-, Tauch- (roll dip coating) oder Vorhangauftragsverfahren (curtain coating) und dergleichen aufgebracht.

Sowohl die elektromagnetische Wellen reflektierende Schicht als auch die Clusterschicht können partiell aufgebracht werden. Wenn diese mittels PVD- oder CVD-Verfahren aufgebracht werden, so erfolgt die Strukturierung mittels bekannter Ätz- oder Waschverfahren. Ein derartiges Verfahren ist beispielsweise In EP 1 291 463 A geoffenbart.

Anschließend kann auf der elektromagnetische Wellen reflektierenden Schicht eine Abdeckschicht aufgebracht werden, die ggf. auch funktionelle Merkmale aufweisen kann.
Diese Abdeckschicht dient ggf. als Barriereschicht für eine nachfolgend aufgebrachte Klebebeschichtung, insbesondere eine Selbstklebebeschichtung bzw. eine Heiß- oder Kaltsiegelbeschichtung. Die Abdeckschicht stellt gleichzeitig eine Schutzschicht für die elektromagnetische Wellen reflektierende Schicht dar.

Auf der zweiten Oberfläche des Trägersubstrats kann ggf. ein Druckprimer aufgebracht sein, um eine spätere Bedruckung der Oberfläche zu erleichtern oder überhaupt zu ermöglichen.

In einer weiteren Ausführungsform kann der Aufbau der Schichten des Farbkippeffekts auch spiegelverkehrt erfolgen, wobei dann auf die erste Oberfläche des Trägersubstrats zuerst die elektromagnetische Wellen reflektierende Schicht, anschließend die Abstandsschicht, die aus 2 Teilschichten besteht und darauf dann die Clusterschicht aufgebracht ist.

Ferner kann das erfindungsgemäße Sicherheitselement weitere visuell erkennbare und/oder maschinenlesbare Sicherheitsmerkmale aufweisen.
Diese Schichten beispielsweise können bestimmte magnetische, chemische, physikalische und auch optische Eigenschaften aufweisen.

Zur Einstellung der magnetischen Eigenschaften können paramagnetische, diamagnetische und auch ferromagnetische Stoffe, wie Eisen, Nickel und Cobalt oder deren Verbindungen oder Salze (beispielsweise Oxide oder Sulfide) verwendet werden.

Die optischen Eigenschaften der Schicht lassen sich durch sichtbare Farbstoffe bzw. Pigmente, lumineszierende Farbstoffe bzw. Pigmente, die im sichtbaren, im UV-Bereich oder im IR-Bereich fluoreszieren bzw. phosphoreszieren, Effektpigmente, wie Flüssigkristalle, Perlglanz, Bronzen und/oder Multilayer-Farbumschlagpigmente und wärmeempfindliche Farben bzw. Pigmente beeinflussen. Diese sind einzeln bzw. in allen möglichen Kombinationen einsetzbar.

Ferner kann das erfindungsgemäße Sicherheitselement optisch aktive Merkmale, wie Beugungsgitter, Diffraktionsstrukturen, Hologramme, Kinegramme und dergleichen aufweisen.

Zur Einstellung elektrischer Eigenschaften, beispielsweise Leitfähigkeit können beispielsweise Graphit, Ruß, leitfähige organische oder anorganische Polymere. Metallpigmente (beispielsweise Kupfer, Aluminium, Silber, Gold, Eisen, Chrom und dergleichen), Metalllegierungen wie Kupfer-Zink oder Kupfer- Aluminium oder auch amorphe oder kristalline keramische Pigmente wie ITO und dergleichen zugegeben werden.

Das erfindungsgemäße Sicherheitselement kann eine Selbstklebebeschichtung, eine Heiß- oder Kaltsiegelbeschichtung aufweisen mit der das Sicherheitselement auf einem zu sichernden Objekt fixiert werden kann.

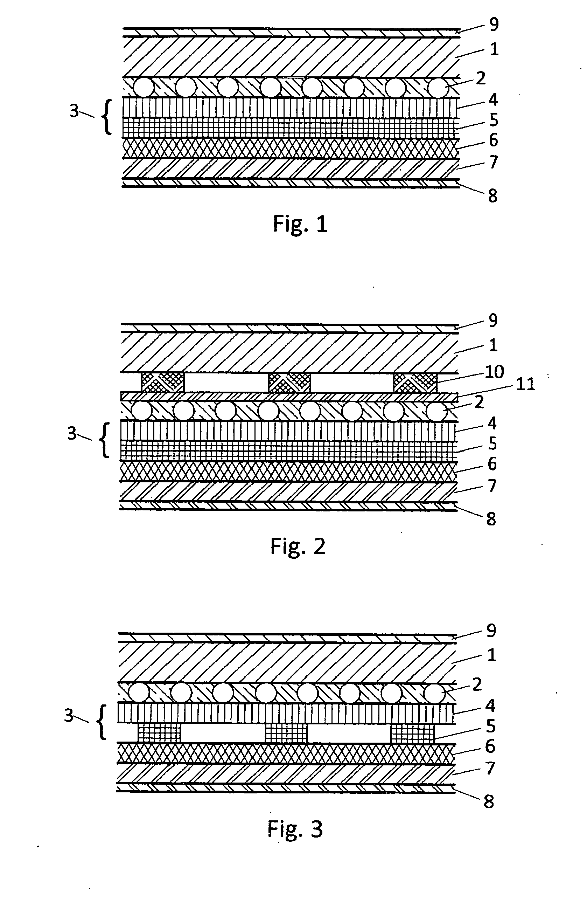

In den Figuren 1 bis 5 sind erfindungsgemäße Ausführungen des erfindungsgemäßen Sicherheitselements dargestellt.

Darin bedeuten
- 1: das Trägersubstrat
- 2: die Schicht aus metallischen Clustern
- 3: die Abstandsschicht
- 4: die erste Teilschicht der Abstandsschicht
- 5: die zweite Teilschicht der Abstandsschicht
- 6: die elektromagnetische Wellen reflektierende Schicht
- 7: die Abdeckschicht
- 8: eine Selbstklebeschicht
- 9: eine druckfreundliche Primerschicht
- 10: eine partielle Trennlackschicht
- 11: Haftvermittlerschicht

Das in Figur 1 dargestellte Sicherheitselement weist ein Trägersubstrat 1, beispielsweise aus PET auf. Auf diesem Trägersubstrat 1 ist auf einer Oberfläche ein druckfreundlicher Primer 9, auf der anderen Oberfläche eine Schicht bestehend aus metallischen Clustern 2 aufgebracht, wobei die Clusterschicht in diesem Fall aus Cr besteht.
Auf dieser Schicht aus metallischen Clustern ist die Abstandsschicht 3 aufgebracht, die aus zwei Teilschichten 4 und 5 besteht. Die erste vollflächige Teilschicht 4 weist eine gute Haftung zur Clusterschicht auf und besteht aus einem Polyvinylchloridpolymeren Vinnol 14/45H der Fa. Wacker, die zweite Teilschicht 5 ist ebenfalls vollflächig ausgeführt, und besteht in diesem Fall aus Nitrocellulose E 400 der Fa. Wolff Walsrode. Beide Teilschichten sind transparent farblos.
Auf dieser zweiten Teilschicht ist eine elektromagnetische Wellen reflektierende Schicht 6, in diesem Fall eine metallische Schicht aus Al situiert. Die Haftung zwischen der zweiten Teilschicht und der metallischen Al-Schicht ist höher als die Haftung der zweiten Teilschicht zur ersten Teilschicht. Im vorliegenden Beispiel ist die Haftung der Al-Schicht auf der zweiten Teilschicht mittels einer Plasmavorbehandlung zusätzlich erhöht. Diese elektromagnetische Wellen reflektierende Schicht ist mit einer Abdeckschicht 7, insbesondere einer Lackschicht und anschließend mit einer Selbstklebebeschichtung 8 versehen, mit Hilfe derer der Aufbau auf einem zu sichernden Objekt fixiert werden kann.
Der Aufbau zeigt einen Farbkippeffekt von Magenta zu Grün.
Wird das Etikett nach dem Aufkleben manipuliert, d.h. wird versucht es vom zu sichernden Objekt abzuziehen, trennt sich der Aufbau zwischen den beiden Teilschichten der Abstandsschicht.
Dadurch wird der Färbkippeffekt aufgrund der Zerstörung des Interferenzeffekts in der Abstandsschicht vollflächig ausgelöscht. Der Teil des Aufbaus, der am zu sichernden Objekt verbleibt, erscheint metallisch glänzend, während der abgezogene Teil gräulich transparent wirkt.
Versucht man den Aufbau wieder zusammenzusetzen, beispielsweise durch Zusammendrücken oder mittels einer Klebebeschichtung ist der Farbkippeffekt nicht wiederherstellbar, da die ursprüngliche Dicke der Abstandsschicht nicht wiederhergestellt werden kann. Es bleibt entweder ein Luftspalt zwischen den beiden Teilschichten oder es wird bei Verwendung einer Klebeschicht zwischen den beiden Teilschichten die Dicke der Abstandsschicht so weit verändert, dass der Farbkippeffekt nicht mehr originalgetreu wiederhergestellt werden kann.

In Figur 2 ist eine weitere Ausführungsform der Erfindung dargestellt.
Dabei besteht das erfindungsgemäße Sicherheitselement aus einem Trägersubstrat 1, das auf einer Oberfläche mit einem Primer 9 versehen ist und auf der anderen Oberfläche eine partielle Trennlackschicht 10 in Form von Buchstaben, Zahlen, Symbolen, Zeichen, Linien, Guillochen oder dergleichen aufweist. Die Trennlackbeschichtung wird durch eine Silikonbeschichtung gebildet.
Anschließend kann optional eine Haftvermittlerschicht 11 zur Verstärkung der Haftung der nachfolgend aufgebrachten Schicht aus metallischen Clustern 2 aufgebracht sein. Diese Haftvermittlerschicht ist nicht zwingend erforderlich, ist aber bei hohen optischen Anforderungen zweckmäßig, da dadurch ggf. Unebenheiten der Trennlackbeschichtung geglättet werden. In weiterer Folge weist das in Fig. 2 dargestellte Sicherheitselement eine Abstandsschicht 3 bestehend aus einer ersten, auf der Clusterschicht gut haftenden Teilschicht 4, die aus Siliziumoxid besteht und einer zweiten Teilschicht 5, die aus Zinksulfid besteht und eine schlechte Haftung zur ersten Teilschicht, aber eine gute Haftung zur darauffolgenden elektromagnetische Wellen reflektierenden Schicht aufweist, auf. Beide Teilschichten sind in diesem Beispiel transparent ausgeführt.
Auf der Abstandsschicht ist die elektromagnetische Wellen reflektierende metallische Schicht 6 aufgebracht, die wiederum mit einer Abdecklackierung 7 und einer Selbstklebebeschichtung 8 versehen ist.
Dabei sind die Haftungsverhältnisse der Schichten so eingestellt, dass die Trennbeschichtung 10 schlechter auf dem Trägersubstrat 1 haftet, als die beiden Teilschichten 4, 5 der Abstandsschicht 3 untereinander.
Wird das Etikett nach dem Aufkleben manipuliert, d.h. wird versucht es vom zu sichernden Objekt abzuziehen, trennt sich im Bereich, in dem die Trennlackbeschichtung 10 vorhanden ist, die Trennlackbeschichtung 10 vom Trägersubstrat 1 oder von der Clusterschicht 2, in dem Bereich, in dem die Trennlackbeschichtung 10 nicht vorhanden ist, trennen sich die beiden Teilschichten 4 und 5 voneinander. In letzterem Bereich wird der Farbkippeffekt ausgelöscht, in dem Bereich in dem die Trennlackbeschichtung 10 vorhanden ist, bleibt der Farbkippeffekt erhalten, weil es zu keiner Trennung der Teilschichten 4, 5 der Abstandsschicht 3 kommt und somit die Dicke der Abstandsschicht 3 nicht verändert wird.

In Figur 3 ist ein Aufbau dargestellt, bei dem bei einem Manipulationsversuch ein erster Farbkippeffekt völlig ausgelöscht bzw. zerstört wird, ein zweiter Farbkippeffekt jedoch bestehen bleibt.
Das Sicherheitselement weist ein Trägersubstrat 1 auf, beispielsweise eine PET - Kunststofffolie mit einer Dicke von 50µm.
Auf diesem Trägersubstrat 1 ist auf einer Oberfläche ein druckfreundlicher Primer 9, auf der anderen Oberfläche eine Schicht bestehend aus metallischen Clustern 2 aufgebracht, wobei die Clusterschicht in diesem Fall aus Ti besteht.
Auf dieser Schicht aus metallischen Clustern ist die Abstandsschicht 3 aufgebracht, die aus zwei Teilschichten 4 und 5 besteht. Die erste vollflächige Teilschicht 4 weist eine gute Haftung zur Clusterschicht auf, die zweite Teilschicht 5 ist partiell in Form von Zeichen, Buchstaben, Zahlen, Symbolen, Mustern, Linien oder Guillochen und weist eine schlechte Haftung zur ersten Teilschicht 4 und eine ausgezeichnete Haftung zur elektromagnetische Wellen reflektierenden Schicht 6 auf, die auf der zweiten Teilschicht 5 situiert ist, und in diesem Fall aus Ni besteht.
Diese elektromagnetische Wellen reflektierende Schicht 6 ist mit einer Abdeckschicht 7 und anschließend mit einer Selbstklebebeschichtung 8 versehen, mit der der Aufbau auf einem zu sichernden Objekt fixiert werden kann.
Der Aufbau zeigt einen Farbkippeffekt im Bereich, in dem beide Teilschichten 4 und 5 vorhanden sind, von Magenta zu Grün, und im Bereich, in dem nur die erste vollflächige Teilschicht 4 vorhanden ist, einen weiteren Farbkippeffekt von Grün zu Blau.

Wird das Etikett nach dem Aufkleben manipuliert, d.h. wird versucht es vom zu sichernden Objekt abzuziehen, trennt sich im Bereich, in dem beide Teilschichten 4 und 5 vorhanden sind, der Aufbau zwischen den beiden Teilschichten der Abstandsschicht. In den anderen Bereichen, in denen nur die Teilschicht 4 vorliegt, löst sich die Klebebeschichtung 8 vom zu sichernden Objekt.
Dadurch wird der erste Farbkippeffekt wegen der Zerstörung der Interferenz in der Abstandsschicht, die im intakten Sicherheitselement aus beiden Teilschichten 4 und 5 besteht, ausgelöscht. Der zweite Farbkippeffekt bleibt jedoch unverändert erhalten. Versucht man den Aufbau wieder zusammenzusetzen, beispielsweise durch Zusammendrücken oder mittels einer Klebebeschichtung ist der erste Farbkippeffekt nicht wiederherstellbar, da die ursprüngliche Dicke der Abstandsschicht nicht wiederhergestellt werden kann. Es bleibt entweder ein Luftspalt zwischen den beiden Teilschichten oder es wird bei Verwendung einer Klebeschicht zwischen den beiden Teilschichten die Dicke der Abstandsschicht so weit verändert, dass der erste Farbkippeffekt nicht mehr wiederhergestellt werden kann und entweder ein veränderter Farbkippeffekt entsteht oder der Farbkippeffekt ausgelöscht bleibt.

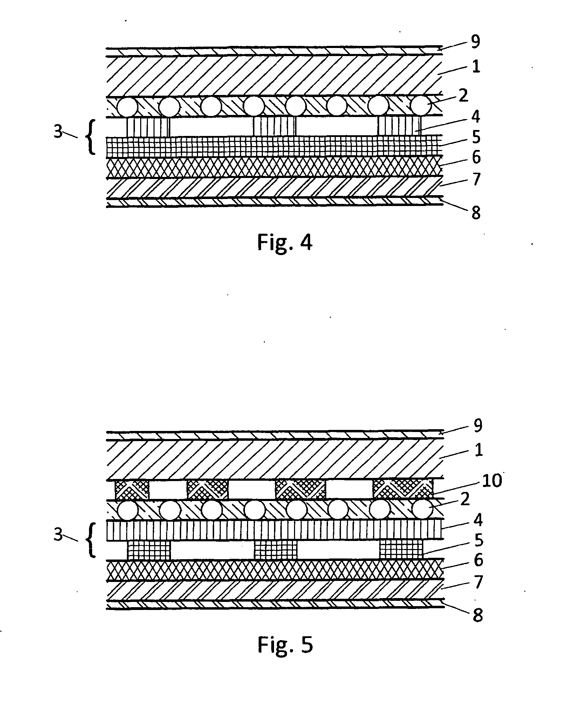

In Figur 4 ist eine dem in Fig. 3 dargestellten Sicherheitselement analoge Ausführungsform der Erfindung dargestellt. In der hier dargestellten Ausführungsform ist allerdings die erste Teilschicht 4 der Abstandsschicht partiell ausgeführt und die zweite Teilschicht der Abstandsschicht vollflächig.
Bei einem Manipulationsversuch wird der Farbkippeffekt analog der in Fig. 3 dargestellten Ausführungsform zerstört.

Die in Figur 5 dargestellten Ausführungsform des erfindungsgemäßen Sicherheitselements weist zusätzlich zu der in Figur 3 dargestellten Ausführungsform auf dem Trägersubstrat eine partielle Trennlackschicht 10 in Form von Buchstaben, Zahlen, Zeichen, Mustern, Symbolen, Linien oder Guillochen auf. Die Trennlackschicht besteht dabei aus einer Silikonbeschichtung.

Daher sind die Haftungsverhältnisse der Schichten so eingestellt, dass die Trennbeschichtung 10 schlechter auf dem Trägersubstrat 1 haftet, als die beiden Teilschichten 4 und 5 der Abstandsschicht 3 untereinander.
Der Aufbau zeigt in den Bereichen, in denen beide Teilschichten 4 und 5 vorhanden sind, einen ersten Farbkippeffekt von Magenta zu Grün, und in den Bereichen, in denen nur die erste vollflächige Teilschicht 4 vorhanden, ist einen zweiten Farbkippeffekt von Grün zu Blau.

Wird das Etikett nach dem Aufkleben manipuliert, d.h. wird versucht es vom zu sichernden Objekt abzuziehen, trennt sich in den Bereichen, in denen die Trennlackbeschichtung 10 vorhanden ist, die Trennlackbeschichtung 10 vom Trägersubstrat 1 oder von der Clusterschicht 2, in den Bereichen, in denen die Trennlackbeschichtung nicht vorhanden ist, trennen sich die beiden Teilschichten 4 und 5 voneinander. In den Bereichen, in dem die Trennlackbeschichtung 10 vorhanden ist, bleibt der erste Farbkippeffekt erhalten, da es hier zu keiner Trennung der Teilschichten 4 und 5 kommt und die Dicke der Abstandsschicht 3 somit unverändert bleibt. Der zweite Farbkippeffekt bleibt ebenfalls bestehen.
In jenen Bereichen, in denen die Trennschicht 10 nicht vorhanden ist, wird bei Trennung der Teilschichten 4 und 5 der erste Farbkippeffekt ausgelöscht, der zweite Farbkippeffekt bleibt bestehen, da sich dort die Klebebeschichtung 8 vom zu sichernden Objekt ablöst
In Abhängigkeit von der relativen Lage der partiellen Trennlackbeschichtung 10 und der partiellen Teilschicht 5 zueinander, bleibt bei einer Überlappung der Situierung der Trennlackbeschichtung 10 und der partiellen Teilschicht 5 der Abstandsschicht 3 der erste Farbkippeffekt in den Überlappungsbereichen bestehen und nach der Manipulation am zu sichernden Objekt, wohingegen in jenen Bereichen, in denen die Trennschicht 10 nicht mit der partiellen Teilschicht 5 der Abstandsschicht 3 überlappt, der erste Farbkippeffekt ausgelöscht wird, da die Abstandsschicht 3 zerstört wird. Der zweite Farbkippeffekt bleibt in jedem Fall bestehen, wobei in den Bereichen, in denen die Trennlackbeschichtung 10 vorliegt, der Farbkippeffekt am zu sichernden Objekt sichtbar ist und in den Bereichen, in denen die Trennlackbeschichtung 10 nicht vorliegt, der gesamte Schichtaufbau inklusive Klebebeschichtung 8 vom am abgezogenen Teil verbleibt

Das erfindungsgemäße Sicherheitselement kann als Sicherheitsetikett zur Sicherung von Wertgegenständen, Datenträgern, Objekten oder Verpackungen beispielsweise in der pharmazeutischen, der Elektronik- und/oder Lebensmittelindustrie verwendet werden.

## Patentansprüche

1. Sicherheitselement insbesondere für Sicherheitsetiketten, aufweisend ein Trägersubstrat (1), das auf einer Oberfläche einen Farbkippeffektaufbau bestehend aus einer Schicht aus metallischen Clustern (2), einer Abstandsschicht (3) und einer elektromagnetische Wellen reflektierenden Schicht (6) aufweist, **dadurch gekennzeichnet, dass** die Abstandsschicht (3) aus zwei aufeinander situierten Teilschichten (4, 5) gleicher oder unterschiedlicher Zusammensetzung besteht, wobei die erste, der Clusterschicht (2) zugewandte Teilschicht (4) eine größere Haftung zur Clusterschicht als zur zweiten Teilschicht (5) aufweist und die zweite, der elektromagnetische Wellen reflektierenden Schicht (6) zugewandte Teilschicht (5) eine größere Haftung zur elektromagnetische Wellen reflektierenden Schicht (6) als zur ersten Teilschicht (4) aufweist.

2. Sicherheitselement nach Anspruch 1, **dadurch gekennzeichnet, dass** auf dem Trägersubstrat (1) unter dem Farbkippeffektaufbau eine partielle Trennlackbeschichtung (10) aufgebracht ist.

3. Sicherheitselement nach einem der Ansprüche 1 oder 2, **dadurch gekennzeichnet, dass** die beiden Teilschichten (4, 5) jeweils unabhängig voneinander aus anorganischen Materialien, beispielsweise aus Metalloxiden, -sulfiden, -fluoriden oder -nitriden oder aus polymeren Materialien, beispielsweise aus Cylcloolefincopolymeren, Nitrocellulose, Acrylaten, Methacrylaten, Polyvinylchlorid, Ethylenacrylatcopolymeren, Styrolacrylaten, Epoxiden oder Polyurethanen bestehen.

4. Sicherheitselement nach einem der Ansprüche 1 bis 3, **dadurch gekennzeichnet, dass** die beiden Teilschichten (4, 5) einen gleichen oder unterschiedlichen Brechungsindex aufweisen.

5. Sicherheitselement nach einem der Ansprüche 1 bis 4, **dadurch gekennzeichnet, dass** die beiden Teilschichten (4, 5) jeweils Schichtdicken zwischen 10 nm und 2 µm aufweisen, wobei die beiden Teilschichten gleiche oder unterschiedliche Dicke aufweisen können.

6. Sicherheitselement nach einem der Ansprüche 1 bis 5, **dadurch gekennzeichnet, dass** die beiden Teilschichten (4, 5) im Wesentlichen transparent sind.

7. Sicherheitselement nach einem der Ansprüche 1 bis 6, **dadurch gekennzeichnet, dass** zumindest eine der beiden Teilschichten (4, 5) eine Färbung oder eine Eigenfarbe aufweist.

8. Sicherheitselement nach einem der Ansprüche 1 bis 7, **dadurch gekennzeichnet, dass** beide Teilschichten (4, 5) vollflächig ausgeführt sind oder zumindest eine Teilschicht (4, 5) als partielle Schicht in Form von positiven oder negativen Buchstaben, Zahlen, Symbolen, Zeichen, Linien, Guillochen ausgeführt ist.

9. Sicherheitselement nach Anspruch 8, **dadurch gekennzeichnet, dass** die in Form von positiven oder negativen Buchstaben, Zahlen, Symbole, Zeichen, Linien oder Guillochen ausgeführte Teilschicht (4, 5) vor einer Manipulation einen unterschiedlichen Farbkippeffekt hervorruft.

10. Sicherheitselement nach Anspruch 8, **dadurch gekennzeichnet, dass** die in Form von positiven oder negativen Buchstaben, Zahlen, Symbole, Zeichen, Linien oder Guillochen ausgeführte Teilschicht (4, 5) nach einer Manipulation eine Entfärbung hervorruft.

11. Sicherheitselement nach einem der Ansprüche 1 bis 10, **dadurch gekennzeichnet, dass** die Clusterschicht (2) aus metallischen Clustern aus Aluminium, Gold, Palladium, Platin, Chrom, Silber, Kupfer, Nickel, Tantal, Titan Zinn, Zink, Molybdän oder deren Legierungen, wie beispielsweise Au/Pd, Cu/Ni oder Cr/Ni oder aus kolloidalen Metallclustern besteht.

12. Sicherheitselement nach einem der Ansprüche 1 bis 11, **dadurch gekennzeichnet, dass** die elektromagnetische Wellen reflektierende Schicht (6) aus Metallen, wie Aluminium, Gold, Chrom, Silber, Kupfer, Titan, Zinn, Platin, Nickel, Molybdän oder Tantal, aus Halbleitern, wie beispielsweise Silizium, und deren Legierungen, beispielsweise Nickel/Chrom, Kupfer/Aluminium oder einer Druckfarbe mit Metallpigmenten sowie aus Metalloxiden, -sulfiden, -nitriden oder-fluoriden besteht.

13. Sicherheitselement nach einem der Ansprüche 1 bis 12, **dadurch gekennzeichnet, dass** es weitere visuell erkennbare und/oder maschinenlesbare Sicherheitsmerkmale enthält.

14. Sicherheitselement nach einem der Ansprüche 1 bis 13, **dadurch gekennzeichnet, dass** auf der dem Farbkippeffekt gegenüberliegenden Oberfläche des Trägersubstrats (1) ein druckfreundlicher Primer (9) aufgebracht ist, der eine Bedruckung aufnimmt.

15. Sicherheitselement nach einem der Ansprüche 1 bis 14, **dadurch gekennzeichnet, dass** es eine Selbstklebe-, Heißsiegel- oder Kaltsiegelbeschichtung aufweist.

16. Verwendung des Sicherheitselements nach einem der Ansprüche 1 bis 15 als oder auf Sicherheitsetiketten.

## Claims

1. Security element, particularly for security labels, having a carrier substrate (1), which has on one surface a colour-shift effect structure consisting of a layer of metal clusters (2), a spacer layer (3) and a layer (6) that reflects electromagnetic waves, **characterized in that** the spacer layer (3) consists of two sub-layers (4, 5) of an identical or different composition situated one on top of the other, wherein the first sub-layer (4), facing the cluster layer (2), has greater adhesion to the cluster layer than to the second sub-layer (5), and the second sub-layer (5), facing the layer (6) that reflects electromagnetic waves, has greater adhesion to the layer (6) that reflects electromagnetic waves than to the first sub-layer (4).

2. Security element according to Claim 1, **characterized in that** on the carrier substrate (1) there is an applied partial release coating (10) under the colour-shift effect structure.

3. Security element according to either of Claims 1 and 2, **characterized in that** the two sub-layers (4, 5) respectively consist independently of one another of inorganic materials, for example of metal oxides, sulphides, fluorides or nitrides, or of polymeric materials, for example of cycloolefinic copolymers, nitrocellulose, acrylates, methacrylates, polyvinylchloride, ethylene acrylate copolymers, styrene acrylates, epoxies or polyurethanes.

4. Security element according to one of Claims 1 to 3, **characterized in that** the two sub-layers (4, 5) have an identical or different refractive index.

5. Security element according to one of Claims 1 to 4, **characterized in that** the two sub-layers (4, 5) respectively have layer thicknesses of between 10 nm and 2 µm, wherein the two sub-layers may have an identical or different thickness.

6. Security element according to one of Claims 1 to 5, **characterized in that** the two sub-layers (4, 5) are substantially transparent.

7. Security element according to one of Claims 1 to 6, **characterized in that** at least one of the two sub-layers (4, 5) has a colouring or an intrinsic colour.

8. Security element according to one of Claims 1 to 7, **characterized in that** both sub-layers (4, 5) are provided over the full surface area or at least one sub-layer (4, 5) is provided as a partial layer in the form of positive or negative letters, numbers, symbols, characters, lines or guilloches.

9. Security element according to Claim 8, **characterized in that** the sub-layer (4, 5) provided in the form of positive or negative letters, numbers, symbols, characters, lines or guilloches brings about a different colour-shift effect before a manipulation.

10. Security element according to Claim 8, **characterized in that** the sub-layer (4, 5) provided in the form of positive or negative letters, numbers, symbols, characters, lines or guilloches brings about a discolouration after a manipulation.

11. Security element according to one of Claims 1 to 10, **characterized in that** the cluster layer (2) consists of metal clusters of aluminium, gold, palladium, platinum, chromium, silver, copper, nickel, tantalum, titanium, tin, zinc, molybdenum or alloys thereof, such as for example Au/Pd, Cu/Ni or Cr/Ni, or of colloidal metal clusters.

12. Security element according to one of Claims 1 to 11, **characterized in that** the layer (6) that reflects electromagnetic waves consists of metals, such as aluminium, gold, chromium, silver, copper, titanium, tin, platinum, nickel, molybdenum or tantalum, of semiconductors, such as for example silicon, and alloys thereof, for example nickel/chromium, copper/aluminium, or a printing ink with metal pigments and also of metal oxides, sulphides, nitrides or fluorides.

13. Security element according to one of Claims 1 to 12, **characterized in that** it contains further visually perceptible and/or machine-readable security features.

14. Security element according to one of Claims 1 to 13, **characterized in that** on the surface of the carrier substrate (1) that lies opposite the colour-shift effect there is an applied print-friendly primer (9), which accepts printing.

15. Security element according to one of Claims 1 to 14, **characterized in that** it has a self-adhesive, hot-seal or cold-seal coating.

16. Use of the security element according to one of Claims 1 to 15 as or on security labels.

## Revendications

1. Elément de sécurité, en particulier pour des étiquettes de sécurité, présentant un substrat porteur (1) qui présente sur une surface une structure à effet de changement de couleur constituée d'une couche de clusters métalliques (2), d'une couche d'écartement (3) et d'une couche (6) réfléchissant des ondes électromagnétiques, **caractérisé en ce que** la couche d'écartement (3) est constituée de deux couches partielles (4, 5) situées l'une sur l'autre de composition identique ou différente, la première couche partielle (4) tournée vers la couche de clusters (2) présentant une plus grande adhérence à la couche de clusters qu'à la seconde couche partielle (5) et la seconde couche partielle (5) tournée vers la couche (6) réfléchissant des ondes électromagnétiques présentant une plus grande adhérence à la couche (6) réfléchissant des ondes électromagnétiques qu'à la première couche partielle (4).

2. Elément de sécurité selon la revendication 1, **caractérisé en ce qu'**un revêtement de vernis de séparation (10) partiel est appliqué sur le substrat porteur (1) sous la structure à effet de changement de couleur.

3. Elément de sécurité selon l'une quelconque des revendications 1 ou 2, **caractérisé en ce que** les deux couches partielles (4, 5) sont constituées chacune indépendamment l'une de l'autre de matériaux anorganiques, par exemple d'oxydes, sulfures, fluorures ou nitrures de métaux ou de matériaux polymères, par exemple de copolymères de cyclooléfine, nitrocellulose, acrylates, méthacrylates, chlorure de polyvinyle, copolymères d'éthylène-acrylate, styrène-acrylates, époxydes ou polyuréthanes.

4. Elément de sécurité selon l'une quelconque des revendications 1 à 3, **caractérisé en ce que** les deux couches partielles (4, 5) présentent un indice de réfraction identique ou différent.

5. Elément de sécurité selon l'une quelconque des revendications 1 à 4, **caractérisé en ce que** les deux couches partielles (4, 5) présentent chacune des épaisseurs de couche entre 10 nm et 2 µm, les deux couches partielles pouvant présenter une épaisseur identique ou différente.

6. Elément de sécurité selon l'une quelconque des revendications 1 à 5, **caractérisé en ce que** les deux couches partielles (4, 5) sont sensiblement transparentes.

7. Elément de sécurité selon l'une quelconque des revendications 1 à 6, **caractérisé en ce qu'**au moins l'une des deux couches partielles (4, 5) présente une coloration ou une propre couleur.

8. Elément de sécurité selon l'une quelconque des revendications 1 à 7, **caractérisé en ce que** les deux couches partielles (4, 5) sont réalisées sur toute la surface ou au moins une couche partielle (4, 5) est réalisée comme une couche partielle sous la forme de lettres, chiffres, symboles, signes, lignes, guilloches positifs ou négatifs.

9. Elément de sécurité selon la revendication 8, **caractérisé en ce que** la couche partielle (4, 5) réalisée sous la forme de lettres, chiffres, symboles, signes, lignes ou guilloches positifs ou négatifs suscite avant une manipulation un effet de changement de couleur différent.

10. Elément de sécurité selon la revendication 8, **caractérisé en ce que** la couche partielle (4, 5) réalisée sous la forme de lettres, chiffres, symboles, signes, lignes ou guilloches positifs ou négatifs suscite après une manipulation une décoloration.

11. Elément de sécurité selon l'une quelconque des revendications 1 à 10, **caractérisé en ce que** la couche de clusters (2) est constituée de clusters métalliques en aluminium, or, palladium, platine, chrome, argent, cuivre, nickel, tantale, titane, étain, zinc, molybdène ou leurs alliages, tels que par exemple Au/Pd, Cu/Ni ou Cr/Ni ou de clusters métalliques colloïdaux.

12. Elément de sécurité selon l'une quelconque des revendications 1 à 11, **caractérisé en ce que** la couche (6) réfléchissant des ondes électromagnétiques est constituée de métaux, tels que l'aluminium, l'or, le chrome, l'argent, le cuivre, le titane, l'étain, le platine, le nickel, le molybdène ou le tantale, de semi-conducteurs, tels que par exemple le silicium, et leurs alliages, par exemple nickel/chrome, cuivre/aluminium ou une encre d'impression avec des pigments métalliques ainsi que d'oxydes, sulfures, nitrures ou fluorures de métaux.

13. Elément de sécurité selon l'une quelconque des revendications 1 à 12, **caractérisé en ce qu'**il contient d'autres caractéristiques de sécurité visuellement reconnaissables et/ou lisibles par machine.

14. Elément de sécurité selon l'une quelconque des revendications 1 à 13, **caractérisé en ce qu'**une couche d'apprêt (9) imprimable est appliquée sur la surface opposée à l'effet de changement de couleur du substrat porteur (1), laquelle couche d'apprêt reçoit une impression.

15. Elément de sécurité selon l'une quelconque des revendications 1 à 14, **caractérisé en ce qu'**il présente un revêtement autocollant, thermoscellable ou scellable à froid.

16. Utilisation de l'élément de sécurité selon l'une quelconque des revendications 1 à 15 comme ou sur des étiquettes de sécurité.
